# EUROPEAN PATENT SPECIFICATION

(11) **EP 4 255 170 B1**
(45) Date of publication and mention of the grant of the patent: **18.09.2024**
(21) Application number: 23701808.0
(22) Date of filing: 30.01.2023
(51) Int. Cl.: A01G 25/02, A01G 25/16, E03C 1/02

(54) **FLUID DISTRIBUTOR**
FLUIDVERTEILER
DISTRIBUTEUR DE FLUIDE

(30) Priority: 25.02.2022 EP 22158691
(43) Date of publication of application: 11.10.2023
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2023/052201
(87) International publication number: WO 2023/160957

(56) References cited:
- EP-A1- 2 100 669
- WO-A2-2004/005628
- US-A1- 2014 263 734
- US-B1- 7 337 982

## Description

### TECHNICAL FIELD

The present disclosure relates to a fluid distributor, and more particularly to the fluid distributor with a plurality of fluid outlets.

### BACKGROUND

A fluid from a fluid source (say a tap) may be required to be conveyed or carried from the fluid source to one or more fluid reservoirs for various industrial and domestic applications. Further, the fluid from the fluid source may be required to be directly used for various applications such as, but not limited to, spraying etc. To use the fluid from the fluid source for multiple applications simultaneously, a fluid distributor may be fluidly coupled to the fluid source.

The fluid distributor is a device that includes a fluid inlet and a plurality of fluid outlets. The plurality of outlets may further be connected to a plurality of fluid distribution or fluid carrying components, such that the fluid from the fluid source may be used for the execution of multiple applications simultaneously.

An example of such a fluid distributor is provided by the United States patent 10,781,578 (hereinafter referred to as '578 reference). The '578 reference provides a water separator with shower seat. The water separator with a shower seat includes a valve body, a frictional unit, a shower seat, and a water outflow switching mechanism. The valve body is provided with a plurality of snap-fit joints disposed circumferentially. The frictional unit is mounted on the valve body and an outer wall thereof is provided with a first frictional surface. The shower seat is provided with a connecting chamber having an open end, and a snap-fit surface and a second frictional surface are circumferentially disposed in the connecting chamber, respectively. The water outflow switching mechanism is mounted in the valve body. Hook heads of the snap-fit joints are snapped to the snap-fit surface to prevent the shower seat from getting separated from the valve body. When the shower seat rotates with respect to the valve body, the first frictional surface and the second frictional surface rotate accordingly and interact with each other. However, there is still a need for an innovative design for a fluid distributor that may stabilize or safeguard a fluid coupling between the fluid distributor and a fluid source that may otherwise be disrupted due to external factors known in the art.

EP patent application EP 2 100 669 A1 (hereinafter referred to as '669 reference) discloses a watering device. The watering device comprises a sprinkler head, a riser and a base unit. A hose is connected to the base unit at a water inlet. The base unit further comprises a riser receiving portion which is at the same time a water outlet of the base unit, and three stabilizing unit receiving portions. A respective stabilizing unit, e.g., spike stakes, etc., is fixed to each of the three stabilizing unit receiving portions. However, there is still a need for an innovative design for a fluid distributor that may stabilize or safeguard a fluid coupling between the fluid distributor and a fluid source that may otherwise be disrupted due to external factors known in the art.

US patent US 7,337,982 B1 (hereinafter referred to as '982 reference) discloses an irrigation device mounted to a base which supports the irrigation device. The irrigation device comprises a vertical pipe having an inlet for a first span and a second span. The portion of the vertical pipe below a sleeve is held in fixed relationship with respect to the base by means of a series of rectangular braces which tie into the angle irons and may include radially inwardly directed spokes which extend to a collar disposed on the vertical pipe to hold the vertical pipe in a fixed vertical axis. Further, the '982 reference discloses that a first end of the respective angle iron is fixed to the sleeve and an opposing second end of the respective angle iron is fixed to the rectangular frame. However, there may be a need to provide a fluid distributor that may stabilize or safeguard a fluid coupling between the fluid distributor and a fluid source that may otherwise be disrupted due to external factors known in the art.

### SUMMARY

In view of the above, it is an objective of the present invention to solve or at least reduce the drawbacks discussed above. The objective is at least partially achieved by a fluid distributor assembly according to claim 1, wherein the fluid distributor assembly includes a body. The body defines a fluid inlet adapted to receive a fluid supply from a fluid source. The body further defines at least one fluid outlet fluidly coupled with the fluid inlet, wherein the at least one fluid outlet is provided with a threaded portion to allow fluid coupling with the fluid distribution component. The fluid distributor assembly further includes one or more stabilizer arms that extend away from the body. The fluid distributor assembly is characterized in that a first end of the one or more stabilizer arms is removably coupled with the threaded portion.

Thus, the fluid distribution assembly of the present disclosure advantageously provides the one or more stabilizer arms that provides stability to the fluid coupling between the fluid distributor assembly and the fluid source. The one or more stabilizer arms prevents sideways dislocation of the body of the fluid distribution assembly relative to the fluid source (say a water socket) upon establishment of the fluid coupling.

According to an embodiment which is not encompassed by the wording of the claims but is considered as useful for understanding the invention, a stabilizer frame is disposed with the body. The stabilizer frame includes one or more stabilizer arms extending away from the body. The stabilizer frame functions as a cage to provide a shelter to the fluid coupling between the fluid distributor assembly and the fluid source. The stabilizer frame additionally provides stability to the fluid coupling between the fluid distributor assembly and the fluid source against external factors.

According to an exemplary embodiment of the preset invention, the threaded portion is separately coupled to the at least one fluid outlet. In other words, the threaded portion is decouplable coupled to the at least one fluid outlet. Thereby, one fluid outlet may be used with different fluid distribution components by individually choosing a respective threaded portion most suitable for the intended application. Hence, an individually adaptable fluid distribution assembly may be providable.

According to an exemplary embodiment of the present invention, the one or more stabilizer arms are removably or permanently coupled with the fluid source. If the one or more stabilizer arms are removably coupled to the fluid source and at the same time removably coupled to the threaded portion, the one or more stabilizer arms may be replaced respectively exchanged individually dependent on, e.g., their individual state of wear. Alternatively, the one or more stabilizer arms may be replaced respectively exchanged dependent on the intended use of the at least one fluid outlet to which the stabilizer arm is coupled. Thereby, if one fluid outlet is used, e.g., for a hose with a large diameter, more forces have to be absorbed and transmitted by the one or more stabilizer arms. Hence, the one or more stabilizer arms may be interchangeable for the individual needs of the user. Alternatively, if the one or more stabilizer arms are permanently coupled with the fluid source, the stability may be increased. Thereby, a fluid distribution assembly with an increased stability may be providable.

According to an exemplary embodiment of the present invention, a second end of the one or more stabilizer arms has a substantially pointed shape and directly engages with a housing ring of the fluid source. Thereby, a force transmission may be directed and controlled. Thereby, a service life of the one or more stabilizer arms and therefore the fluid distribution assembly may be increased.

According to an embodiment of the present disclosure, the one or more stabilizer arms extends away from the body in an angular manner. The one or more stabilizer arms may provide enough space between the body and the one or more stabilizer arms due to the angular geometry to accommodate accessories such as, but not limited to, to a connector to connect or fluidly couple the fluid distributor assembly and the fluid source.

According to an embodiment which is not encompassed by the wording of the claims but is considered as useful for understanding the invention, the one or more stabilizer arms comprise a first end and a second end such that the first end is coupled to the body and the second end is coupled to a stabilizer ring. Further, the stabilizer ring is disposed circumferentially around the body. The stabilizer ring may provide rigidity to the one or more stabilizer arms. The stabilizer ring combined with the one or more stabilizer arms forms the cage structure or provides a housing for the fluid coupling between the fluid distributor assembly and the fluid source. The stabilizer ring combined with the one or more stabilizer arms may prevent disengagement in the fluid coupling due to any external factors known in the art. The external factor may be an inadvertent force generated by a foot of an operator of the fluid distribution assembly.

According to an embodiment which is not encompassed by the wording of the claims but is considered as useful for understanding the invention, the one or more stabilizer arms is three stabilizer arms. The number of the stabilizer arms in the stabilizer frame may directly be related to the strength to the stabilizer frame. The more the number of the stabilizer arms, the more is the rigidity of the stabilizer frame.

According to an embodiment which is not encompassed by the wording of the claims but is considered useful for understanding the invention, the stabilizer ring is made up of a metallic material. The metals are advantageously stronger, harder, and durable. Thus, the metallic material of the stabilizer ring may provide necessary strength and stability to the stabilizer ring and hence the stabilizer frame.

According to an embodiment which is not encompassed by the wording of the claims but is considered useful for understanding the invention, the stabilizer ring engages with a housing ring of the fluid source. The engagement may be a positive engagement that may stabilize the stabilizer frame against lateral forces due to external factors.

According to an embodiment of the present disclosure, the at least one fluid outlet is adapted to fluidly couple with one or more fluid distribution components. The at least one fluid outlet is fluidly coupled with the one or more fluid distribution components to use the fluid for multiple industrial and domestic applications simultaneously.

According to an embodiment of the present disclosure, the one or more fluid distribution components is selected from a fluid computer, a hose pipe, a connector that allows the connection of a hose, a sprinkler etc. The one or more fluid distribution components may be selected based on the application requirements, or operator preferences.

According to an embodiment of the present disclosure, the at least one fluid outlet is further provided with a manual shut-off valve. The fluid flow from the at least one outlet may be selectively controlled using the manual shut-off valve. The manual shut-off valve may be operated by the operator as per the application requirements.

According to the present invention, the at least one fluid outlet is provided with a threaded portion to allow fluid coupling with the fluid distribution component. Most of the commonly used fluid distribution components (say the hose pipe) include the threaded portion for the fluid coupling. Thus, the at least one fluid outlet is advantageously provided with the threaded portion to couple with the fluid distribution component easily and securely.

According to an embodiment of the present disclosure, the at least one fluid outlet distributes fluid in a horizontal direction. Further, the at least one fluid outlet distributes fluid in a vertical direction as well. The at least one fluid outlet advantageously distributes the fluid in both the horizontal as well as the vertical directions. The operator may selectively couple the fluid distribution components in the horizontal direction or the vertical direction or both the directions as per the application requirements. The operator may not be forced to fluidly couple the fluid distribution component such as a flexible hose pipe in the vertical direction, which may sometimes lead to unwanted turning or twisting of the flexible hose pipe and make the flexible hose pipe less durable.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a fluid distribution assembly fluidly coupled with a fluid source, in accordance with an embodiment which is not encompassed by the wording of the claims but is considered as useful for understanding the invention;
**FIG. 2** illustrates a perspective view of a fluid source, in accordance with an aspect of the present disclosure;
**FIG. 3** illustrates a perspective view of a fluid distribution assembly, in accordance with an embodiment which is not encompassed by the wording of the claims but is considered useful for understanding the invention;
**FIG. 4A** illustrates a perspective exploded view of an exemplary embodiment of a fluid distribution assembly, in accordance with an aspect of the present disclosure;
**FIG. 4B** illustrates a perspective view of a fluid distribution assembly of **FIG. 4A****,** in accordance with an aspect of the present disclosure;
**FIG. 5** illustrates another perspective view of a fluid distribution assembly of **FIG. 4A****,** in accordance with an aspect of the present disclosure;
**FIG. 6** illustrates a perspective view of a fluid distribution assembly fluidly coupled with a connector, in accordance with an embodiment which is not encompassed by the wording of the claims but is considered as useful for understanding the invention;
**FIG. 7** illustrates another perspective view of a fluid distribution assembly fluidly coupled with a connector, in accordance with an embodiment which is not encompassed by the wording of the claims but is considered useful for understanding the invention;
**FIG. 8** illustrates a perspective view of a fluid distribution assembly being fluidly coupled with a fluid source, in accordance with an embodiment which is not encompassed by the wording of the claims but is considered useful for understanding the invention;
**FIG. 9** illustrates a cross-sectional view of a fluid source fluidly coupled with a fluid distribution assembly, in accordance with an embodiment which is not encompassed by the wording of the claims but is considered useful for understanding the invention; and
**FIG. 10** illustrates a perspective view of a fluid source fluidly coupled with a fluid distribution assembly of **FIGS. 4A** and **4B****,** in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention defined by the appended claims to those skilled in the art. For example, one or more aspects of the present invention may be utilized in other embodiments. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

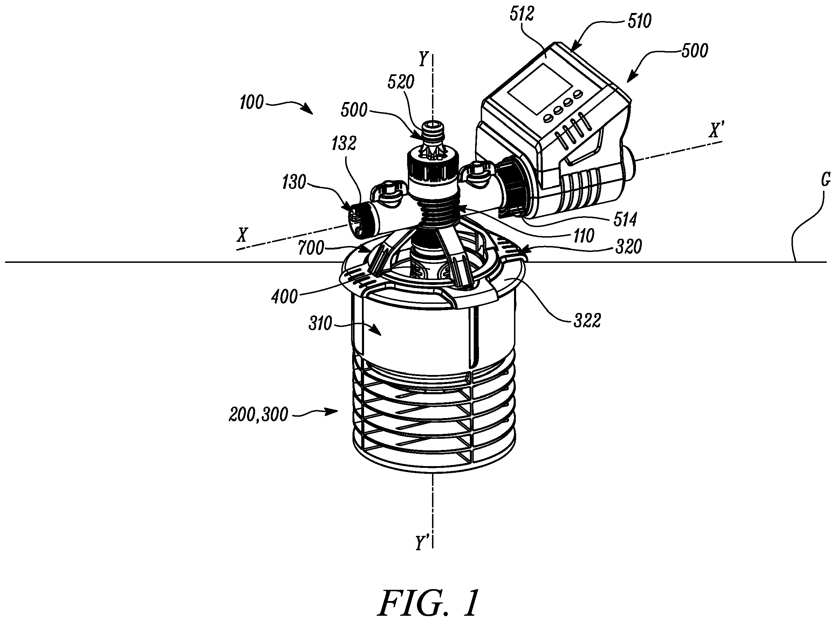

**FIG. 1** illustrates a fluid distributor assembly **100** according to an embodiment which is not encompassed by the wording of the claims but is considered useful for understanding the invention. The fluid distributor assembly **100** is adapted to receive a fluid supply from a fluid source **200** (say a tap). The fluid distributor assembly **100** is further adapted to distribute the received fluid across multiple fluid outlets **130** for use with various industrial and domestic applications. The various industrial and domestic applications may include irrigation, cleaning, firefighting etc.

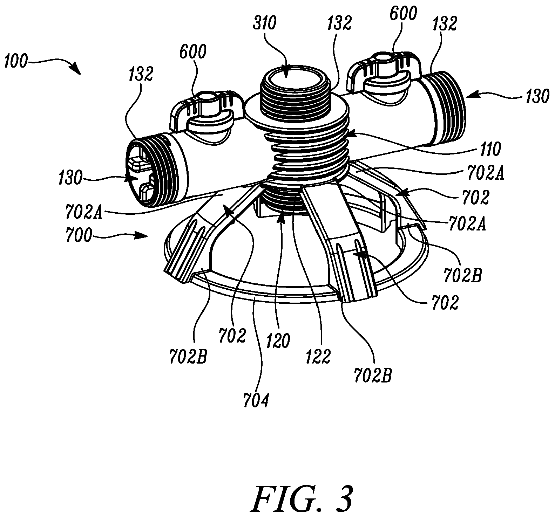

The fluid distributor assembly **100** includes a body **110.** The body **110** may be made from one or more of metal, steel, plastic, or any other material known in the art. The body **110** defines a fluid inlet **120** (as shown in **FIG. 3**) adapted to be fluidly coupled with the fluid source **200** such that the fluid inlet **120** receives a fluid supply from the fluid source **200.** The fluid inlet **120** is fluidly coupled with the fluid source **200** via a connector **400.** Further, the connector **400** is fluidly coupled to a threaded portion **122** (as shown in **FIG. 3**) of the fluid inlet **120.** The connector **400** may be made of any material such as plastic, a PVC material or any other suitable material known or used in the art to improve durability. The connector **400** may be made frost-proof or leakage proof to overcome damage due to frost in cold and chilly weather.

The fluid source **200** may be the source of a liquid (say a water) or a gas. In some embodiments, the fluid source **200** may be fully or partially embedded in the ground surface **"G".** In some embodiments, the fluid source **200** may be housed above or on the ground surface **"G"** by any means known in the art. In some embodiments, the fluid source **200** may be attached or coupled to a wall surface (not shown).

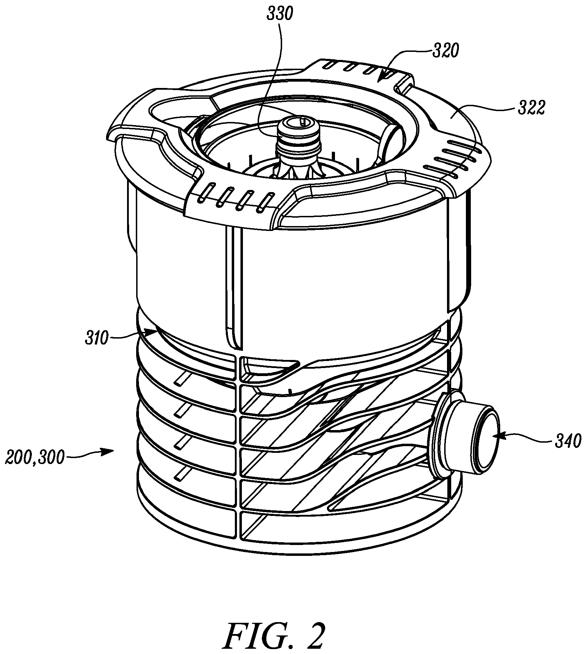

For the implementation of the present disclosure, the fluid source **200,** as shown in **FIGS. 1** and **2** is a water socket **300,** and the fluid is water. The water socket **300** is partially embedded in the ground surface **"G".** The water socket **300** allows discharge of the water from a water source (not shown) towards the fluid inlet **120** of the fluid distributor assembly **100.** The water socket **300** includes a body **310.** The body **310** of the present disclosure is cylindrical in shape. However, the body **310** may have any shape and size known in the art without limiting the scope of the present disclosure.

The body **310** includes an annular surface **320,** a coupling nipple **330** and a water inlet **340.** The annular surface **320** includes a housing ring **322.** The water inlet **340** may be fluidly coupled with the water source via a series of pipes (not shown) embedded in the ground surface **"G".** In some embodiments, the water source may be an underground water reservoir (not shown). However, the water source may any water source known in the art. Further, the water source may be housed above or below the ground surface **"G"** by any means known in the art.

In some embodiments, the coupling nipple **330** may be designed in a manner such that when the coupling nipple **330** is fluidly coupled with the fluid inlet **120** of the fluid distributor assembly **100** via the connector **400,** the coupling nipple **330** may allow the water from the water inlet **340** to flow towards the fluid inlet **120.** Furthermore, when the coupling nipple **330** is not fluidly coupled with the fluid inlet **120** of the fluid distributor assembly **100** via the connector **400,** the coupling nipple **330** may disallow the water from the water inlet **340** to flow towards the fluid inlet **120.**

With continued reference to **FIG. 1****,** the body **110** of the fluid distributor assembly **100** defines at least one fluid outlet **130** fluidly coupled with the fluid inlet **120** (as shown in **FIG. 3**). For the implementation of the present disclosure, the at least one fluid outlet **130** are three fluid outlets **130** i.e., two horizontal fluid outlets **130** along **X-X'** axis and one vertical fluid outlet **130** along **Y-Y'** axis (as clearly shown in **FIG. 3**). The **X-X'** axis is perpendicular to the **Y-Y'** axis. Thus, the at least one fluid outlet **130** or two horizontal fluid outlets **130** which are along **X-X'** axis distributes fluid in the horizontal direction. Similarly, the at least one fluid outlet **130** or one vertical fluid outlet **130** which is along **Y-Y'** axis distributes fluid in the vertical direction.

However, the scope of the present disclosure should not be restricted by the number and directional orientation of the fluid outlets **130.** In some embodiments, the at least one fluid outlet **130** may be along an axis (not shown) at an angle to the **X-X'** axis or the **Y-Y'** axis and may distribute fluid along any arbitrary direction.

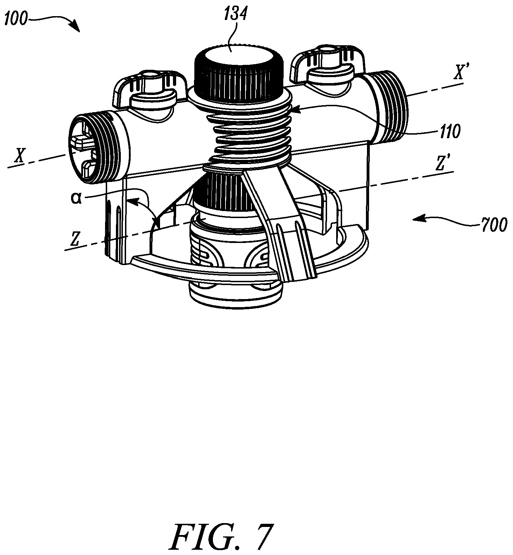

In some embodiments, the at least one fluid outlet **130** is adapted to fluidly couple with one or more fluid distribution components **500** or to be sealed with a cap **134** (as shown in **FIG. 7**). The cap **134** may prevent entry of foreign materials such as dirt etc. in the body **110** of the fluid distribution assembly **100** when the at least one fluid outlet **130** is not fluidly coupled with one or more fluid distribution components **500.** Thus, the cap **134** may prevent unwanted blockages in the body **110** of the fluid distribution assembly **100.**

The at least one fluid outlet **130** is fluidly coupled with the one or more fluid distribution components **500** to use the fluid (or water) for multiple industrial and domestic applications simultaneously. An operator may selectively couple the fluid distribution components **500** in the horizontal direction or the vertical direction or both the directions as per the application requirements. For example, the operator may selectively couple the fluid distribution components **500** in the horizontal direction when a plurality of sprinklers (not shown) is required to be fluidly coupled on the ground surface **"G".** Further, the operator may not be forced to fluidly couple the fluid distribution component **500** (say a flexible hose pipe) in the vertical direction, which may sometimes lead to unwanted turning or twisting of the flexible hose pipe and make the flexible hose pipe less durable.

The one or more fluid distribution components **500** may be selected based on the application requirements, or operator preference. The one or more fluid distribution components **500** may be selected from a fluid computer **510,** an aqua-stop nipple **520,** a hose pipe (not shown), a connector that allows the connection of a hose (not shown), a sprinkler (not shown) etc. In some embodiments, the fluid distribution components **500** is the fluid computer **510.** The fluid-computer **510** is interchangeably referred to as the water-computer **510** in the present disclosure and is connected directly to the at least one fluid outlet **130.** The water-computer **510** includes a control panel **512** to allow selection and display of irrigation settings. The water-computer **510** may reliably control irrigation according to the irrigation settings (including time, frequency, and duration of the irrigation) selected by the operator. In some embodiments, a rain sensor or soil moisture sensor may be connected to the water computer **510** so that when it rains or if the soil is already moist enough, the programmed irrigation is cancelled, thus saving valuable water resources.

Further, in some embodiments, the fluid distribution components **500** is the aqua-stop nipple **520.** The aqua-stop nipple **520** may be similar in construction or design of the coupling nipple **330.** Furthermore, the aqua-stop nipple **520** may be similar in working to the coupling nipple **330.** The aqua-stop nipple **520** may be fluidly coupled to the hose pipe (not shown) via the hose connector (not shown). The aqua-stop nipple **520** may allow or disallow the flow of fluid from the fluid source **200** to the hose pipe depending on the engagement or fluid coupling of the aqua-stop nipple **520** with the hose connector. For example, the aqua-stop nipple **520** may allow the flow of fluid from the fluid source **200** to the hose pipe, if the aqua-stop nipple **520** is fluidly coupled to the hose connector. Similarly, the aqua-stop nipple **520** may disallow the flow of fluid from the fluid source **200** to the hose pipe, if the aqua-stop nipple **520** is not fluidly coupled to the hose connector.

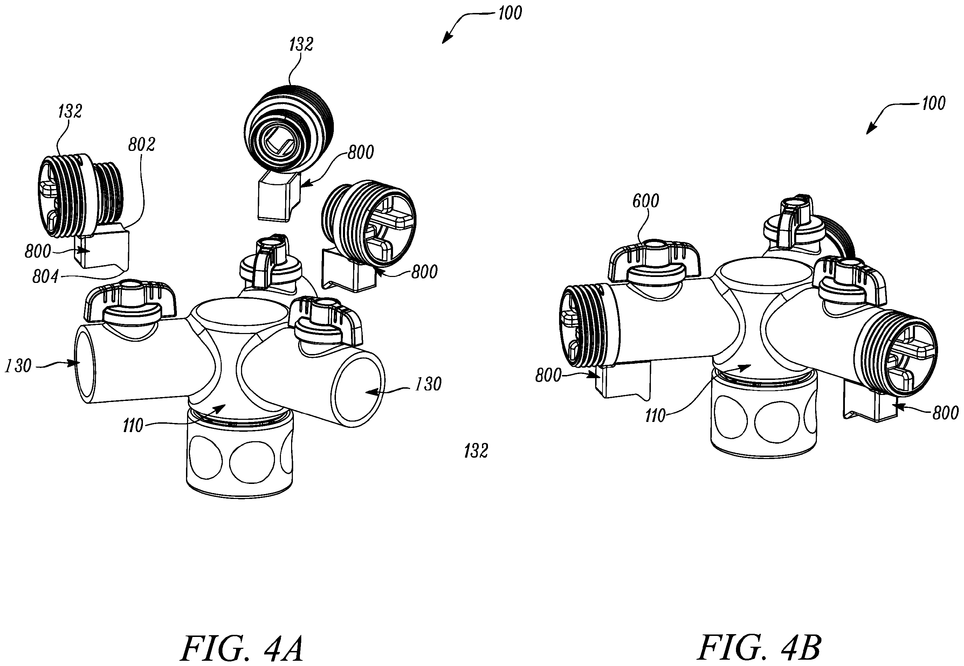

As further illustrated in **FIGS. 1** and **3****,** the at least one fluid outlet **130** is advantageously provided with a threaded portion **132** to allow fluid coupling with the fluid distribution component **500** as most of the commonly used fluid distribution components **500** include the threaded portion for the fluid coupling. In some embodiments, as shown with **FIGS. 4A** and **4B****,** the threaded portion **132** is separately coupled to the at least one fluid outlet **130.** The threaded portion **132** includes a small diameter area and a large diameter area such that the small diameter area is threaded engaged with the at least one fluid outlet **130** whereas the large diameter threaded area is threaded engaged to the fluid distribution component **500.** The at least one fluid outlet **130** of the present disclosure are three fluid outlets **130** and accordingly the threaded portion **132** are three threaded portions **132** integrally formed or separately coupled with three fluid outlets **130.** However, in actual implementation of the present disclosure, the number of fluid outlets **130** may vary according to the application requirement, body size, among other factors.

Further, in some embodiments, the small diameter area as discussed above may be threadless and coupled to the at least one fluid outlet **130** by friction-fitting, gluing, welding, or other coupling methods known and understood in the related art. In some embodiments, the large diameter area as discussed above may be threadless and may include a connector that allows the connection of a hose and the like. In some embodiments which are not encompassed by the wording of the claims but are considered as useful for understanding the invention, there may be no threaded portion **132.** The threaded portion **132** may be replaced by a component with similar geometry i.e., the component having a small diameter area and a large diameter area such that the small diameter area may be coupled to the at least one fluid outlet **130** by friction-fitting, gluing, welding, or other coupling methods as discussed above, and the large diameter area may include a connector that allows the connection of a hose and the like for further fluid connections or couplings. In some embodiments, the at least one fluid outlet **130** may be coupled to the combination of different types of threaded portions **132** or an alternative component having no threaded portion as discussed above as per the application requirements.

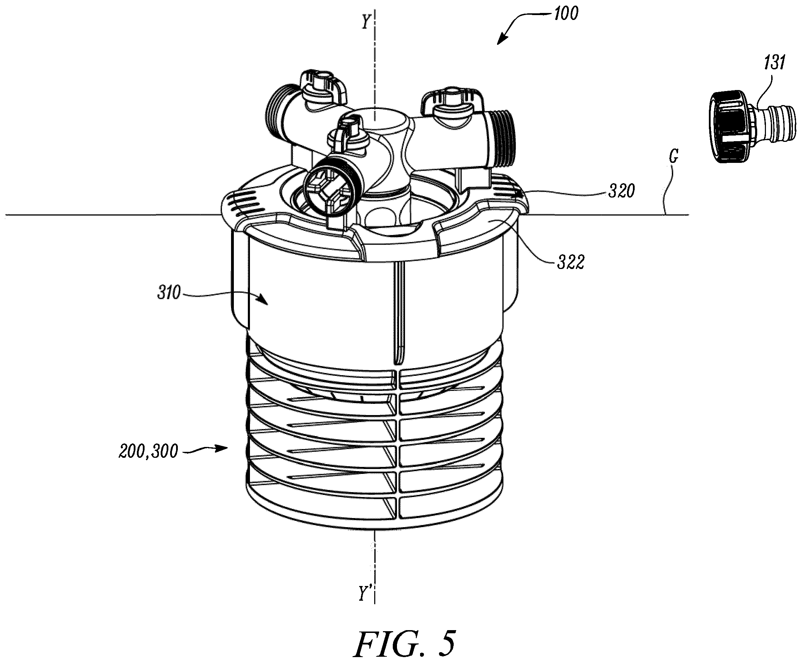

In the present disclosure, the fluid computer **510** is fluidly coupled with the at least one fluid outlet **130** by virtue of engagement between the threaded portion **132** of the at least one fluid outlet **130** and the threaded portion **514** of the fluid computer **510.** Similarly, the aqua-stop nipple **520** is fluidly coupled with the at least one fluid outlet **130** by virtue of engagement between the threaded portion **132** of the at least one fluid outlet **130** and the internal threaded portion (not shown) of the aqua-stop nipple **520.** Further, other known fluid distribution components **500** may be fluidly coupled to the at least one fluid outlet **130** by providing a coupler **131** (as shown in **FIGS. 5**) with each of the at least one fluid outlet **130.** The coupler **131** may be coupled to the at least one fluid outlet **130** due to threaded engagement, friction-fitting or by any other means known in the related art.

With continued reference to **FIGS. 1** and **3****,** the at least one fluid outlet **130** is further provided with a manual shut-off valve **600.** The fluid flow from the at least one outlet **130** may be selectively controlled using the manual shut-off valve **600.** The manual shut-off valve **600** may be operated by the operator as per the application requirements. In some embodiments, the shut-off valve **600** may be an automatic shut-off valve. The automatic shut-off valve **600** may operate as per various fluid parameter requirements such as the flow rate requirements. The electronic set-up for the automatic shut-off valve **600** may include a plurality of sensors, microprocessors and related electronic circuitry commonly known and understood in the art.

The fluid coupling of the body **110** with the fluid source **200** (or the water socket **300**) as illustrated so far in **FIG. 1** may need a stabilizer frame **700** for providing the stability or shelter to the fluid coupling against external factors such as, but not limited to, strong wind, inadvertent force generated by the foot of the operator among others. Thus, the fluid distributor assembly **100** includes a stabilizer frame **700** disposed with the body **110.**

The stabilizer frame **700,** as illustrated in **FIGS. 1** and **3** includes one or more stabilizer arms **702** having a first end **702A** and a second end **702B** such that the first end **702A** is coupled to the body **110.** The one or more stabilizer arms **702** extends away from the body **110.** Further, a stabilizer ring **704** is coupled to the second end **702B** of the one or more stabilizer arms **702.** In some embodiments, one single stabilizer ring **704** is coupled to the one or more stabilizer arms **702.** In some embodiments, the stabilizer ring **704** may be formed by discontinuous angular pieces that may couple with the second end **702B** of the one or more stabilizer arms **702** to form the ring.

Thus, the stabilizer frame **700** forms a cage like structure to provide shelter to the fluid coupling between the fluid distributor assembly **100** and the fluid source **200.** Further, the stabilizer frame **700** may prevent disengagement in the fluid coupling between the body **110** and the fluid source **200** due to any of the external factors know to the person skilled in the art.

The stabilizer frame **700** including the one or more stabilizer arms **702** and the stabilizer ring **704** may be made up or manufactured using a metallic material. The metals are advantageously stronger, harder, and durable. Thus, the metallic material of the stabilizer frame **700** may provide necessary strength, rigidity, and stability to the stabilizer frame **700.** In some embodiments, the stabilizer frame **700** may be manufactured using a plastic material or any other suitable material known and understood in the related art.

In some embodiments which are not encompassed by the wording f the claims but are considered as useful for understanding the invention, the stabilizer frame **700** and the body **110** are manufactured in one piece using any suitable manufacturing technology known in the art. In some embodiments, the stabilizer frame **700** and the body **110** are manufactured separately and then coupled to each other by use of fasteners, welding or any other coupling method known and understood in the art.

With continued reference to **FIG. 3****,** the one or more stabilizer arms **702** is three stabilizer arms **702.** The number of the stabilizer arms **702** in the stabilizer frame may directly be related to the strength to the stabilizer frame **700.** The number of the stabilizer arms **702** in the stabilizer frame may directly contribute to the strength to the stabilizer frame **700.** The more the number of the stabilizer arms **702,** the more is the rigidity of the stabilizer frame **700.** However, there must be a substantial gap or space between the adjacent stabilizer arms **702** such that the operator may be able to grab and manipulate the connector **400** as and when required.

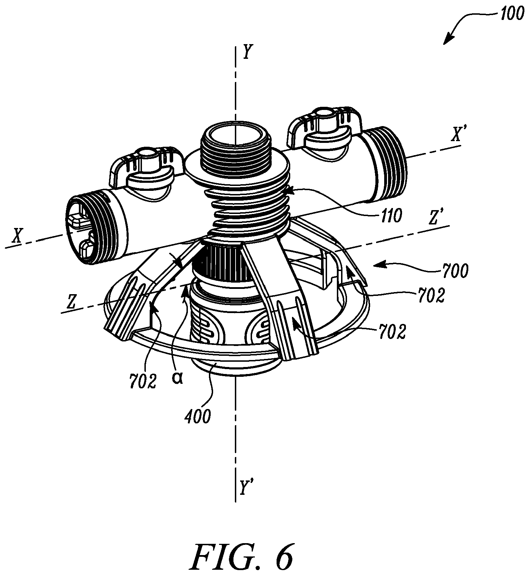

In some embodiments, as shown in **FIG. 6****,** the one or more stabilizer arms **702** extends away from the body **110** in an angular manner. The one or more angular stabilizer arms **702** due to the angular geometry may provide enough space between the body **110** and the one or more stabilizer arms **702** to accommodate accessories such as, but not limited to, to the connector **400** to connect or fluidly couple the fluid distributor assembly **100** and the fluid source **200.** The one or more stabilizer arms **702** may form an angle **α** with an axis **Z-Z'** parallel to the **X-X'** axis. The angle **α** is such that it allows the stabilizer ring to be disposed circumferentially around the body **110.** In some embodiments as shown in **FIG. 7****,** the angle **α** is **90** degrees. In this embodiment, the stabilizer frame **700** forms a relatively compact structure and may advantageously be used when the fluid distribution assembly **100** is employed in places with space constraints.

According to the present invention, as shown in **FIGS. 4A** and **4B****,** one or more stabilizer arms **800** are removably coupled with the threaded portion **132** separately coupled to the at least one fluid outlet **130.** The removable coupling may be achieved by any means known in the art. The one or more stabilizer arms **800** includes first end **802** and second end **804.** The first end **802** of the one or more stabilizer arms **800** is removably coupled with the threaded portion **132.** Further, in this embodiment as well, the one or more stabilizer arms **800** extends away from the body **110.** Further, the one or more stabilizer arms **800** is three stabilizer arms **800** removably coupled with each of the three threaded portions **132.** Further, in some embodiments, the one or more stabilizer arms **800** may be removably or permanently coupled with the body **110.** In some embodiments, the one or more stabilizer arms **800** may be removably or permanently coupled with the water socket **300.**

As shown in FIG. 4A and 4B, the one or more stabilizing arms **800** may be three stabilizing arms **800.** Each of the one or more stabilizer arms **800** is coupled to a respective one of the threaded portions **132.** The coupling may be formed by a ring which may be mounted around the threaded portion **132,** particularly around the small diameter area adjacent to the large diameter area. The coupling may be formed by a ring portion being engaged on the small diameter area, before threadedly engaging the threaded portion **132** to the fluid outlet **130.** Alternatively, the coupling of the stabilizer arm **800** to the threaded portion **132** may be formed by a partial ring portion which extends around at least a sub-portion of the circumference of the small diameter area of the threaded portion **132.**

According to an exemplary embodiment of the invention, the stabilizer arm **800** may be coupled with the threaded portion **132** at the large diameter area.

**FIG. 5** shows the fluid distribution assembly **100** mounted to a water socket **300** being the fluid source **200.** Each of the three fluid outlets **130** has a threaded portion **132** and a respective stabilizer arm **800** mounted to the fluid outlet **130.** The first end **802** of the stabilizer arm **800** is removably coupled to the threaded portion **132** and the second end **804** is engaged with a housing ring 322 of the water socket **300** being the fluid source **200.**

The fluid distribution assembly **100** may be bought in a package (not shown). The package may be any reusable package known in the art. The package may be reused without the need of any recycling. The package may further include necessary accessories such as the connector **400,** the aqua-stop nipple **520,** the water socket **300,** hose pipes etc.

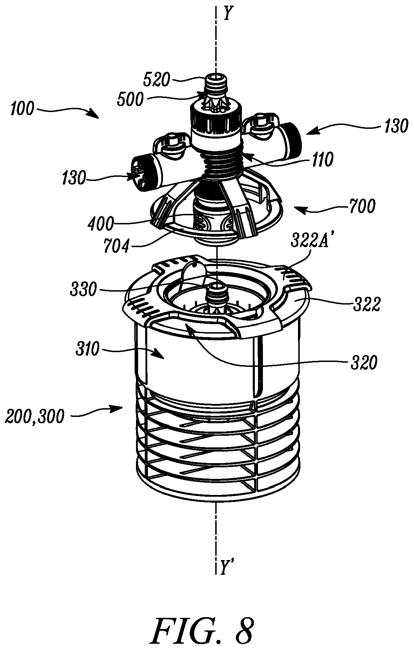

During implementation of the fluid distribution assembly **100,** the operator may simply take out the fluid distribution assembly **100** and the associated accessories from the package. For example, the operator may fluidly couple the at least one fluid outlet **130** with the aqua-stop nipple **520.** Further, the operator may fluidly couple the fluid inlet **120** with the connector **400.** Furthermore, the operator may embed the water socket **300** in the ground surface **"G".** The exemplary embodiment is illustrated in **FIG. 8****.**

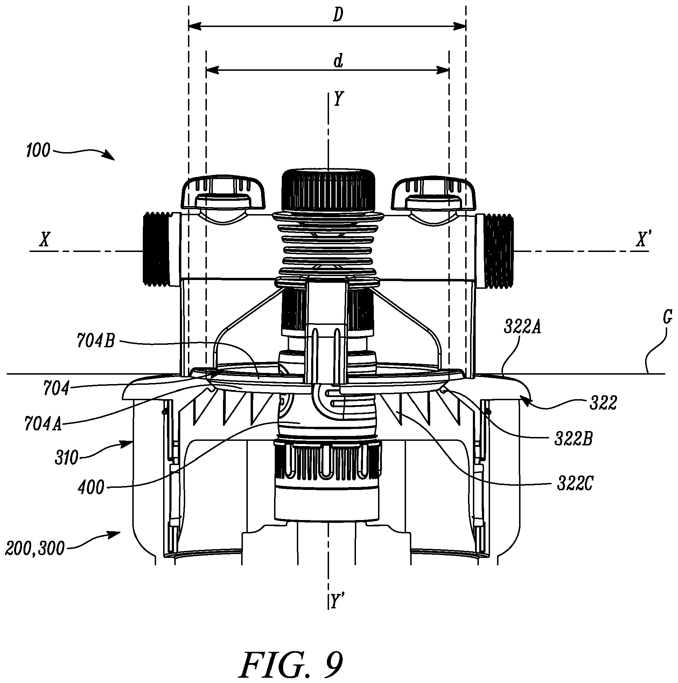

Further, in this exemplary embodiment of the **FIG. 8****,** the operator may bring the assembled fluid distribution assembly **100** (i.e., the body **110** fluidly coupled with the socket **400**) towards the coupling nipple **330** of the water socket **200** such that the connector **400** is fluidly coupled with the coupling nipple **330** along the **Y-Y'** axis. Upon coupling, the stabilizer frame **700** forms the cage like structure to provide shelter to the fluid coupling between the fluid distributor assembly **100** and the fluid source **200** (or the water socket **300**) against external factors, such as the bad weather. Further, the stabilizer ring **704** engages with the housing ring **322** positioned on the annular surface **320** of the body **310** of the water socket **300.** As illustrated in **FIG. 9****,** the stabilizer ring **704** includes an inner portion **704A** and an outer portion **704B.** The diameter **"d"** of the inner portion **704A** and the diameter **"D"** of the outer portion **704B** is such that the diameter **"d"** < diameter **"D".** Further, the outer portion **704B** is above the inner portion **704A** when seen along the axis **Y-Y'** in the direction away from the ground surface **"G".**

With continued reference to **FIG. 9****,** the housing ring **322** includes a flat surface portion **322A** with equally spaced protrusions **322A'** (as shown in **FIG. 8**) and an annular slanted rib portion **322B.** The flat surface portion **322A** and the slanted rib portion **322B** are supported by a plurality of ribs **322C** circumferentially disposed on an inner side of the annular surface **320** of the water socket **300.** Upon engagement between the coupling nipple **330** (as shown in **FIG. 8**) of the water socket **300** and the connector **400,** the outer portion **704B** of the stabilizer ring **704** engages with the flat surface portion **322A** of the housing ring **322.** Further, the inner portion **704A** of the stabilizer ring **704** engages with the slanted rib portion **322B** of the housing ring **322.** Thus, if a force is applied vertically to the fluid distributor assembly **100** along the vertical **Y-Y'** axis or along the horizontal **X-X'** axis, the engagement between the coupling nipple **330** of the water socket **300** and the connector **400** may be prevented from disengagement. Further, the connector **400** or the coupling nipple **330** may be prevented from breakage or damage.

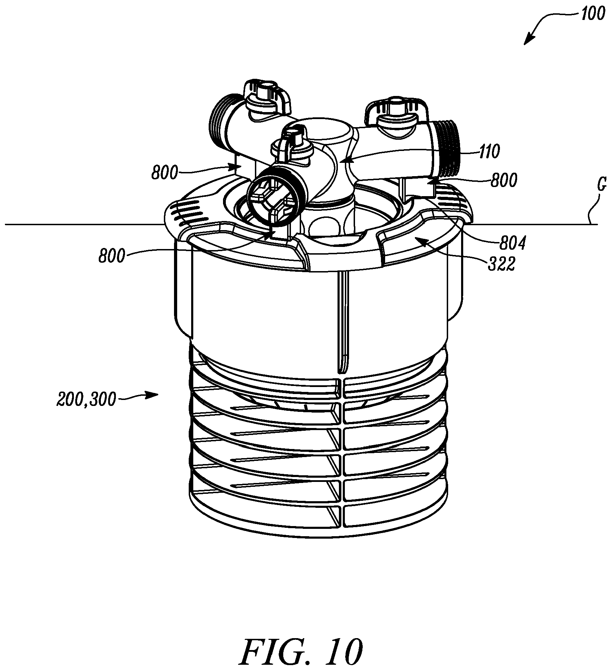

**FIG. 10** illustrates the fluid distribution system **100** with the one or more stabilizer arms **800** of **FIGS. 4A** and **4B****.** The implementation of the fluid distribution system **100** is carried out in nearly similar manner as described in detail above. The difference lies due to the absence of the stabilizer ring **704.** In this embodiment, the second end **804** of the one or more stabilizer arms **800** has nearly pointed shape and directly engages with the housing ring **322.** Further, the one or more stabilizer arms **800** may also transmit forces to the water socket **300** in the vertical direction. The one or more stabilizer arms **800** thus prevent sideways dislocation of the body **110** of the fluid distribution assembly **100** relative to the fluid source **200** (or water socket **300**) upon establishment of the fluid coupling.

As depicted in **Fig. 10****,** each of the three stabilizer arms **800** is removably coupled with the threaded portion **132** with its first end **802.** Additionally, the second end **804** of each of the three stabilizer arms **800** is coupled with the water socket **300.**

Thus, the fluid distribution assembly **100** of the present disclosure is an easy to couple muti-way fluid distributor assembly **100.** The fluid distribution assembly **100** is fluidly coupled to any fluid source **200** using the connector **400.** The fluid distribution assembly **100** allows the utilization of fluid from the fluid source **200** for multiple applications simultaneously. Further, the outflow of the fluid from the at least one fluid outlet **130** of the fluid distribution assembly **100** is selectively controlled by the one or more shut-off valves **600.** Furthermore, the fluid distribution assembly **100** includes the stabilizer frame **700** (or simply the one or more stabilizer arms **800**) to provide stability to the fluid coupling between the fluid distributor assembly **100** and the fluid source **200** against external factors.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Fluid Distributor Assembly
- **110**: Body
- **120**: Fluid Inlet
- **122**: Threaded Portion
- **130**: Fluid Outlet
- **131**: Coupler
- **132**: Threaded Portion
- **134**: Cap
- **200**: Fluid Source
- **300**: Water Socket
- **310**: Body
- **320**: Annular Surface
- **322**: Housing Ring
- **322A**: Flat surface portion
- **322A'**: Protrusions
- **322B**: Annular Slanted rib portion
- **322C**: Ribs
- **330**: Coupling Nipple
- **340**: Water Inlet
- **400**: Connector
- **500**: Fluid Distribution Component
- **510**: Fluid Computer/ Water Computer
- **512**: Control Panel
- **514**: Threaded Portion
- **520**: Aqua-stop Nipple
- **600**: Shut-Off Valve
- **700**: Stabilizer Frame
- **702**: Stabilizer Arms
- **702A**: First End
- **702B**: Second End
- **704**: Stabilizer Ring
- **704A**: Inner Portion
- **704B**: Outer Portion
- **800**: Stabilizer Arms
- **802**: First End
- **804**: Second End
- **G**: Ground Surface
- **X-X'**: Axis
- **Y-Y'**: Axis
- **Z-Z'**: Axis
- **α**: Angle
- **d**: Diameter
- **D**: Diameter

## Claims

1. A fluid distributor assembly **(100)** comprising:
a body **(110);**
the body **(110)** defining a fluid inlet **(120)** adapted to receive a fluid supply from a fluid source **(200, 300);**
the body **(110)** defining at least one fluid outlet **(130)** fluidly coupled with the fluid inlet **(120);**
wherein the at least one fluid outlet **(130)** is provided with a threaded portion **(132)** to allow fluid coupling with a the fluid distribution component **(500);**
wherein the fluid distributor assembly **(100)** further includes one or more stabilizer arms **(702, 800)** extending away from the body **(110),**
**characterized in that:**
a first end **(802)** of the one or more stabilizer arms (800) is removably coupled with the threaded portion **(132).**

2. The fluid distribution assembly **(100)** according to claim 1,
wherein the threaded portion **(132)** is separately coupled to the at least one fluid outlet **(130).**

3. The fluid distribution assembly **(100)** according to claim 1 or 2,
wherein the one or more stabilizer arms (800) are removably or permanently coupled with the fluid source **(200, 300).**

4. The fluid distribution assembly **(100)** according to any one of the preceding claims,
wherein a second end **(804)** of the one or more stabilizer arms (800) has a substantially pointed shape and directly engages with a housing ring (322) of the fluid source **(200, 300).**

5. The fluid distributor assembly **(100)** of any of preceding claims,
wherein the one or more stabilizer arms **(702)** extends away from the body **(110)** in an angular manner.

6. The fluid distribution assembly **(100)** according to any one of the preceding claims,
wherein the one or more stabilizer arms **(702, 800)** are three stabilizer arms **(702, 800).**

7. The fluid distribution assembly **(100)** according to any one of the preceding claims,
wherein the at least one fluid outlet **(130)** are three fluid outlets **(130).**

8. The fluid distribution assembly **(100)** according to any one of the preceding claims,
wherein a number of the one or more stabilizer arms **(702, 800)** is equal to a number of the at least one fluid outlet **(130).**

9. The fluid distributor assembly **(100)** of any of preceding claims,
wherein the at least one fluid outlet **(130)** is adapted to fluidly couple with one or more fluid distribution components **(500).**

10. The fluid distributor assembly **(100)** of claim 9,
wherein the one or more fluid distribution components **(500)** is selected from a fluid computer **(510),** a hose pipe, a connector that allows a connection of a hose connector, and a sprinkler.

11. The fluid distributor assembly **(100)** of any of preceding claims,
wherein the at least one fluid outlet **(130)** is further provided with a manual shut-off valve **(600).**

12. The fluid distributor assembly **(100)** of any of preceding claims,
wherein the at least one fluid outlet **(130)** distributes fluid in a horizontal direction.

13. The fluid distributor assembly **(100)** of any of preceding claims,
wherein the at least one fluid outlet **(130)** distributes fluid in a vertical direction.

## Patentansprüche

1. Fluidverteileranordnung **(100),** umfassend:
einen Körper **(110);**
wobei der Körper **(110)** einen Fluideinlass **(120)** definiert, der geeignet ist, um eine Fluidzufuhr von einer Fluidquelle **(200, 300)** aufzunehmen;
wobei der Körper **(110)** mindestens einen Fluidauslass **(130)** definiert, der mit dem Fluideinlass **(120)** fluidisch gekoppelt ist;
wobei der mindestens eine Fluidauslass **(130)** mit einem Gewindeabschnitt **(132)** versehen ist, um eine fluidische Kopplung mit einer Fluidverteilerkomponente **(500)** zu ermöglichen;
wobei die Fluidverteileranordnung **(100)** ferner einen oder mehrere Stabilisatorarme **(702, 800)** einschließt, die sich von dem Körper **(110)** weg erstrecken,
**dadurch gekennzeichnet, dass:**
ein erstes Ende **(802)** des einen oder der mehreren Stabilisatorarme **(800)** mit dem Gewindeabschnitt **(132)** abnehmbar gekoppelt ist.

2. Fluidverteileranordnung **(100)** nach Anspruch 1,
wobei der Gewindeabschnitt **(132)** mit dem mindestens einen Fluidauslass **(130)** separat gekoppelt ist.

3. Fluidverteileranordnung **(100)** nach Anspruch 1 oder 2,
wobei der eine oder die mehreren Stabilisatorarme (800) mit der Fluidquelle **(200, 300)** abnehmbar oder permanent gekoppelt sind.

4. Fluidverteileranordnung **(100)** nach einem der vorstehenden Ansprüche,
wobei ein zweites Ende **(804)** des einen oder der mehreren Stabilisatorarme (800) eine im Wesentlichen spitze Form aufweist und einen Gehäusering (322) der Fluidquelle **(200, 300)** direkt in Eingriff nimmt.

5. Fluidverteileranordnung **(100)** nach einem der vorstehenden Ansprüche,
wobei sich der eine oder die mehreren Stabilisatorarme **(702)** auf eine winklige Weise von dem Körper **(110)** weg erstrecken.

6. Fluidverteileranordnung **(100)** nach einem der vorstehenden Ansprüche,
wobei der eine oder die mehreren Stabilisatorarme **(702, 800)** drei Stabilisatorarme **(702, 800)** sind.

7. Fluidverteileranordnung **(100)** nach einem der vorstehenden Ansprüche,
wobei der mindestens eine Fluidauslass **(130)** drei Fluidauslässe **(130)** sind.

8. Fluidverteileranordnung **(100)** nach einem der vorstehenden Ansprüche,
wobei eine Anzahl des einen oder der mehreren Stabilisatorarme **(702, 800)** gleich einer Anzahl des mindestens einen Fluidauslasses **(130)** ist.

9. Fluidverteileranordnung **(100)** nach einem der vorstehenden Ansprüche,
wobei der mindestens eine Fluidauslass **(130)** geeignet ist, um mit einer oder mehreren Fluidverteilerkomponenten **(500)** fluidisch gekoppelt zu sein.

10. Fluidverteileranordnung **(100)** nach Anspruch 9,
wobei die eine oder die mehreren Fluidverteilerkomponenten **(500)** aus einem Fluidcomputer **(510),** einer Schlauchleitung, einem Verbinder, der eine Verbindung eines Schlauchverbinders ermöglicht, und einem Sprinkler ausgewählt sind.

11. Fluidverteileranordnung **(100)** nach einem der vorstehenden Ansprüche,
wobei der mindestens eine Fluidauslass **(130)** ferner mit einem manuellen Absperrventil **(600)** versehen ist.

12. Fluidverteileranordnung **(100)** nach einem der vorstehenden Ansprüche,
wobei der mindestens eine Fluidauslass **(130)** Fluid in einer horizontalen Richtung verteilt.

13. Fluidverteileranordnung **(100)** nach einem der vorstehenden Ansprüche,
wobei der mindestens eine Fluidauslass **(130)** Fluid in einer vertikalen Richtung verteilt.

## Revendications

1. Ensemble distributeur de fluide **(100)** comprenant :
un corps **(110)** ;
le corps **(110)** définissant une entrée de fluide **(120)** adaptée pour recevoir une alimentation en fluide à partir d'une source de fluide **(200, 300) ;**
le corps **(110)** définissant au moins une sortie de fluide **(130)** accouplée fluidiquement à l'entrée de fluide **(120)** ;
dans lequel l'au moins une sortie de fluide **(130)** est pourvue d'une partie filetée **(132)** pour permettre l'accouplement fluidique avec un composant de distribution de fluide **(500)** ;
dans lequel l'ensemble distributeur de fluide **(100)** comporte en outre un ou plusieurs bras stabilisateurs **(702, 800)** s'étendant à l'écart du corps **(110),**
**caractérisé en ce que :**
une première extrémité **(802)** du ou des bras stabilisateurs (800) est accouplée de manière amovible à la partie filetée **(132).**

2. Ensemble de distribution de fluide **(100)** selon la revendication 1,
dans lequel la partie filetée **(132)** est accouplée séparément à l'au moins une sortie de fluide **(130).**

3. Ensemble de distribution de fluide **(100)** selon la revendication 1 ou 2,
dans lequel le ou les bras stabilisateurs (800) sont accouplés de manière amovible ou permanente à la source de fluide **(200, 300).**

4. Ensemble de distribution de fluide **(100)** selon l'une quelconque des revendications précédentes,
dans lequel une seconde extrémité **(804)** du ou des bras stabilisateurs (800) a une forme sensiblement pointue et vient directement en prise avec un anneau de logement (322) de la source de fluide **(200, 300).**

5. Ensemble distributeur de fluide **(100)** selon l'une quelconque des revendications précédentes,
dans lequel le ou les bras stabilisateurs **(702)** s'étendent à l'écart du corps **(110)** de manière angulaire.

6. Ensemble de distribution de fluide **(100)** selon l'une quelconque des revendications précédentes,
dans lequel le ou les bras stabilisateurs **(702, 800)** sont trois bras stabilisateurs **(702, 800).**

7. Ensemble de distribution de fluide **(100)** selon l'une quelconque des revendications précédentes,
dans lequel l'au moins une sortie de fluide **(130)** est constituée de trois sorties de fluide **(130).**

8. Ensemble de distribution de fluide **(100)** selon l'une quelconque des revendications précédentes,
dans lequel un nombre de bras stabilisateurs parmi le ou les bras stabilisateurs **(702, 800)** est égal à un nombre de l'au moins une sortie de fluide **(130).**

9. Ensemble distributeur de fluide **(100)** selon l'une quelconque des revendications précédentes,
dans lequel l'au moins une sortie de fluide **(130)** est adaptée pour s'accoupler avec un ou plusieurs composants de distribution de fluide **(500).**

10. Ensemble distributeur de fluide **(100)** selon la revendication 9,
dans lequel le ou les composants de distribution de fluide **(500)** sont choisis parmi un ordinateur à fluide **(510),** un tuyau flexible, un raccord permettant le raccordement d'un raccord de tuyau et un asperseur.

11. Ensemble distributeur de fluide **(100)** selon l'une quelconque des revendications précédentes,
dans lequel l'au moins une sortie de fluide **(130)** est en outre pourvue d'une vanne d'arrêt manuelle **(600).**

12. Ensemble distributeur de fluide **(100)** selon l'une quelconque des revendications précédentes,
dans lequel l'au moins une sortie de fluide **(130)** distribue un fluide dans une direction horizontale.

13. Ensemble distributeur de fluide **(100)** selon l'une quelconque des revendications précédentes,
dans lequel l'au moins une sortie de fluide **(130)** distribue un fluide dans une direction verticale.
